# EUROPEAN PATENT APPLICATION

(11) **EP 4 697 656 A1**
(43) Date of publication of application: **18.02.2026**
(21) Application number: 24861579.1
(22) Date of filing: 05.06.2024
(51) Int. Cl.: H04L 12/28

(54) **DEPLOYMENT METHOD AND SYSTEM FOR SMART-HOME SCENARIO, AND ELECTRONIC DEVICE AND STORAGE MEDIUM**

(30) Priority: 08.09.2023 CN 202311164590
(71) Applicant: Huawei Technologies Co., Ltd., Shenzhen, Guangdong 518129 (CN)
(72) Inventor: YIN, Jiaxin, Shenzhen, Guangdong 518129 (CN)
(74) Representative: Grünecker Patent- und Rechtsanwälte PartG mbB
(86) International application number: PCT/CN2024/097491
(87) International publication number: WO 2025/050731

(57) **Abstract**

This application provides a smart home scene deployment method and system, an electronic device, and a storage medium. The method includes: obtaining a target scene and architecture information of a smart home network; and deploying the target scene on a target node based on the architecture information of the smart home network. The target node includes a first node and/or a second node, the first node is a host in the smart home network, and the second node includes an extension host and/or a gateway in the smart home network. The method provided in this application helps improve scene execution performance.

## Description

This application claims priority to Chinese Patent Application No. 202311164590.7, filed with the China National Intellectual Property Administration on September 8, 2023 and entitled "SMART HOME SCENE DEPLOYMENT METHOD AND SYSTEM, ELECTRONIC DEVICE, AND STORAGE MEDIUM", which is incorporated herein by reference in its entirety.

### TECHNICAL FIELD

This application relates to the field of smart home, and in particular, to a smart home scene deployment method and system, an electronic device, and a storage medium.

### BACKGROUND

In a smart home network, users can link various smart home devices throughout their houses by creating scenes, enabling coordinated control over these smart home devices. For example, when a temperature reaches a specific threshold, air conditioners can be automatically turned on; or when outdoor wind reaches a specific level, windows can be automatically closed.

Scenes are typically deployed on a host throughout the house, and a scene engine of the host drives a corresponding scene. Rules of the scenes are typically based on a smart home platform, combining conditions such as states of smart home devices and time with executable actions by the smart home devices to form smart rules. Depending on whether conditions are included in the rules, scene rules can be classified into automatic scene rules and a manual scene rules.

The manual scene rules refer to users manually combining actions of smart home devices and creating a button on the smart home platform to enable one-tap control over multiple devices. The automatic scene rules refer to combining conditions (such as time, weather conditions, location information, device states, device events, and the like) with device actions according to users' needs, forming rules that execute the corresponding actions when preset conditions are met.

However, a large quantity of scenes deployed on the host affects load of the host, resulting in performance bottlenecks of the host, slower response, or even system crashes.

### SUMMARY

This application provides a smart home scene deployment method and system, an electronic device, and a storage medium, to help improve scene execution performance.

According to a first aspect, this application provides a smart home scene deployment method, applied to a first node, and including: obtaining a target scene and architecture information of a smart home network; and deploying the target scene on a target node based on the architecture information of the smart home network, where the target node includes the first node and/or a second node, the first node is a host in the smart home network, and the second node includes an extension host and/or a gateway in the smart home network.

The method provided in this application helps improve scene execution performance.

In a possible implementation, the deploying the target scene on the target node based on the architecture information of the smart home network includes: obtaining historical load information of the first node and/or historical load information of the second node; and deploying the target scene on the target node based on the historical load information of the first node and/or the historical load information of the second node and the architecture information of the smart home network.

In this application, the load information of the nodes in the smart home network is used as reference conditions for scene deployment. This can help balance load of the nodes, and avoid deterioration of scene execution performance and even breakdown that are caused by overloading of a node.

In a possible implementation, the target scene includes an effective moment, the historical load information of the first node includes load information that is of the first node and that corresponds to the effective moment, and the historical load information of the second node includes load information that is of the second node and that corresponds to the effective moment.

In a possible implementation, the target scene includes multiple pieces of information in event information, condition information, and action information, and the deploying the target scene on the target node based on the architecture information of the smart home network includes: obtaining multiple segments based on the target scene, where any one of the multiple segments includes an event segment, a condition segment, or an action segment in the target scene; and deploying the multiple segments on the target node based on the architecture information of the smart home network.

In this application, multiple segments of a scene are deployed on different nodes, so that flexibility of scene deployment can be improved, and the load of the nodes in the smart home network can be balanced.

In a possible implementation, the target node includes an event node and an action node, the event segment in the target scene is deployed on the event node, the action segment in the target scene is deployed on the action node, and the method further includes: The event node monitors an event; and the event node sends first information to the action node in response to the detected event, for the action node to execute, based on the first information, an action corresponding to the action segment in the target scene, where the first information indicates that the detected event already meets a rule corresponding to the event segment in the target scene.

In this application, a scene in which the multiple segments are deployed on different nodes can be effectively executed through information exchange between the nodes.

In a possible implementation, the target node includes an event node, a condition node, and an action node, the event segment in the target scene is deployed on the event node, the condition segment in the target scene is deployed on the condition node, the action segment in the target scene is deployed on the action node, and the method further includes: The event node monitors an event; and the event node sends first information to the condition node in response to the detected event, for the condition node to determine, based on the first information, whether a condition meets a rule corresponding to the condition segment in the target scene, and after the condition meets the rule corresponding to the condition segment in the target scene, the condition node sends second information to the action node, for the action node to execute, based on the second information, an action corresponding to the action segment in the target scene, where the first information indicates that the detected event already meets a rule corresponding to the event segment in the target scene, and the second information indicates that the condition already meets the rule corresponding to the condition segment in the target scene.

In this application, the scene in which the multiple segments are deployed on different nodes can be effectively executed through the information exchange between the nodes.

In a possible implementation, the event includes a status change event of a target smart home device, and the target smart home device is a smart home device controlled by the event node in the target scene.

In a possible implementation, the method further includes: obtaining scene information deployed on the first node; and deploying the target scene on the target node based on the scene information deployed on the first node and the architecture information of the smart home network.

In this application, the deployed scene information is used as a reference factor during scene deployment. This helps avoid deterioration of scene execution performance caused by an excessively large quantity of deployed scenes.

In a possible implementation, deploying the target scene on the target node based on the scene information deployed on the first node and the architecture information of the smart home network includes: obtaining a scene that is in a scene deployed on the first node and that has a same effective moment as that of the target scene; and if a quantity of scenes that have the same effective moment as that of the target scene is greater than or equal to a first concurrency threshold, skipping deploying the target scene on the first node.

In a possible implementation, the target node is a node that supports capabilities required by the multiple segments, and the capabilities required by the multiple segments include at least a delayed execution capability of the segment and/or a cyclic execution capability of the segment.

In a possible implementation, the quantity of scenes that are on the target node and that have the same effective moment as the target scene is less than a second concurrency threshold.

In a possible implementation, critical segments in the multiple segments are deployed on a same target node, the critical segment includes one or more of a critical event segment, a critical condition segment, and a critical action segment, and the critical segment is a segment indicating whether a scene is successfully executed.

In a possible implementation, a distance between the target node and the smart home device controlled by the target node is the shortest.

In a possible implementation, obtaining the target scene includes: obtaining the target scene in response to a scene creation request; or obtaining the target scene in response to a version upgrade request on the first node.

According to a second aspect, this application provides a smart home scene deployment system, including a first node and a second node, where the first node is configured to: obtain a target scene and architecture information of a smart home network; and deploy the target scene on a target node based on the architecture information of the smart home network, where the target node includes the first node and/or the second node, the first node is a host in the smart home network, and the second node includes an extension host and/or a gateway in the smart home network.

In a possible implementation, the first node is further configured to: obtain historical load information of the first node and/or historical load information of the second node; and deploy the target scene on the target node based on the historical load information of the first node and/or the historical load information of the second node and the architecture information of the smart home network.

In a possible implementation, the target scene includes multiple pieces of information in event information, condition information, and action information, and the first node is further configured to: obtain multiple segments based on the target scene, where any one of the multiple segments includes an event segment, a condition segment, or an action segment in the target scene; and deploy the multiple segments on the target node based on the historical load information of the first node and the architecture information of the smart home network.

In a possible implementation, the target node includes an event node and an action node, the event segment in the target scene is deployed on the event node, and the action segment in the target scene is deployed on the action node, where the event node is configured to: monitor an event; and send first information to the action node in response to the detected event; and the action node is configured to execute, based on the first information, an action corresponding to the action segment in the target scene, where the first information indicates that the detected event already meets a rule corresponding to the event segment in the target scene.

In a possible implementation, the target node includes an event node, a condition node, and an action node, the event segment in the target scene is deployed on the event node, the condition segment in the target scene is deployed on the condition node, and the action segment in the target scene is deployed on the action node, where the event node is configured to: monitor an event, and send first information to the condition node in response to the detected event; the condition node is configured to: determine, based on the first information, whether a condition meets a rule corresponding to the condition segment in the target scene, and after the condition meets the rule corresponding to the condition segment in the target scene, send second information to the action node; and the action node is configured to execute, based on the second information, an action corresponding to the action segment in the target scene, where the first information indicates that the detected event already meets a rule corresponding to the event segment in the target scene, and the second information indicates that the condition already meets the rule corresponding to the condition segment in the target scene.

According to a third aspect, this application provides a smart home scene deployment apparatus, including one or more functional modules. The one or more functional modules are configured to implement the smart home scene deployment method according to the first aspect.

According to a fourth aspect, this application provides an electronic device, including a processor and a memory. The memory is configured to store a computer program, and the processor is configured to run the computer program, to implement the smart home scene deployment method according to the first aspect.

According to a fifth aspect, this application provides a computer-readable storage medium. The computer-readable storage medium stores a computer program, and when the computer program is run on a computer, the computer is enabled to implement the smart home scene deployment method according to the first aspect.

According to a sixth aspect, this application provides a computer program. When the computer program is run on a processor of an electronic device, the electronic device is enabled to perform the smart home scene deployment method according to the first aspect.

In a possible design, the program in the sixth aspect may be all or partially stored in a storage medium encapsulated together with a processor, or may be all or partially stored in a memory not encapsulated together with a processor.

### BRIEF DESCRIPTION OF DRAWINGS

FIG. 1 is a diagram of a structure of a smart home network in the conventional technology;
FIG. 2 is a diagram of a system architecture according to an embodiment of this application;
FIG. 3 is a schematic flowchart of an embodiment of a smart home scene deployment method according to this application;
FIG. 4 is a schematic flowchart of another embodiment of a smart home scene deployment method according to this application;
FIG. 5 is a diagram of an embodiment of a shared node determining manner according to this application;
FIG. 6 is a diagram of another embodiment of a shared node determining manner according to this application;
FIG. 7 is a diagram of still another embodiment of a shared node determining manner according to this application;
FIG. 8 is a diagram of an embodiment of a target node determining manner according to this application;
FIG. 9 is a diagram of another embodiment of a target node determining manner according to this application;
FIG. 10 is a diagram of still another embodiment of a target node determining manner according to this application;
FIG. 11 is a diagram of yet another embodiment of a target node determining manner according to this application;
FIG. 12 is a schematic flowchart of still another embodiment of a smart home scene deployment method according to this application;
FIG. 13 is a schematic flowchart of yet another embodiment of a smart home scene deployment method according to this application;
FIG. 14 is a diagram of a structure of an embodiment of a smart home scene deployment apparatus according to this application; and
FIG. 15 is a diagram of a structure of an electronic device according to an embodiment of this application.

### DESCRIPTION OF EMBODIMENTS

In embodiments of this application, unless otherwise specified, a character "/" indicates an "or" relationship between associated objects. For example, A/B may indicate A or B. A term "and/or" describes an association relationship between the associated objects, and indicates that three relationships may exist. For example, A and/or B may indicate the following three cases: Only A exists, both A and B exist, and only B exists.

It should be noted that, in embodiments of this application, terms such as "first" and "second" are merely intended for distinguishing and description, and should not be understood as indicating or implying relative importance or implicitly indicating a quantity of indicated technical features, or should not be understood as indicating or implying a sequence.

In embodiments of this application, "at least one" means one or more, and "multiple" means two or more. In addition, "at least one of the following items (pieces)" or a similar expression thereof refers to any combination of these items and may include a single item (piece) or any combination of multiple items (pieces). For example, at least one item (piece) of A, B, or C may indicate A, B, C, A and B, A and C, B and C, or A, B, and C. A, B, and C each may be an element, or may be a set that includes one or more elements.

In embodiments of this application, "example", "in some embodiments", "in another embodiment", or the like indicate giving an example, an illustration, or a description. Any embodiment or design scheme described as an "example" in this application should not be explained as being more preferred or having more advantages than another embodiment or design scheme. Exactly, use of the term example is intended to present a concept in a specific manner.

In embodiments of this application, terms "of (of)", "corresponding (corresponding, relevant)", and "corresponding (corresponding)" may be interchangeably used sometimes. It should be noted that meanings expressed by the terms are consistent when differences are not emphasized. In embodiments of this application, communication and transmission may be interchangeably used sometimes. It should be noted that meanings expressed by the terms are consistent when differences are not emphasized. For example, transmission may include sending and/or receiving, and may be a noun or a verb.

In embodiments of this application, "equal to" may be used together with "greater than", and is applicable to a technical solution used in a case of "greater than"; or may be used together with "less than", and is applicable to a technical solution used in a case of "less than". It should be noted that, when "equal to" is used together with "greater than", "equal to" cannot be used together with "less than"; and when "equal to" is used together with "less than", "equal to" cannot be used together with "greater than".

In a smart home network, a user may create a scene to link various smart home devices at home, so as to implement a linkage control requirement of the user on the smart home devices. For example, when a temperature reaches a specific condition, an air conditioner at home may be automatically turned on; or when outdoor wind reaches a specific condition, a window at home may be automatically closed.

The scene is usually deployed on a host of a whole house, and a scene engine of the host drives the corresponding scene. A rule of the scene is usually an intelligent rule formed by combining, based on a smart home platform, a condition like a status of the smart home device or time with an action that can be executed by the smart home device. Scene rules can be classified into an automatic scene rule and a manual scene rule based on whether a condition is included in the scene rule.

The manual scene rule means that the user manually combines actions of the smart home devices, and sets a button on the smart home platform, to implement a function of controlling the multiple smart home devices with a single button. The automatic scene rule is a rule that is formed by combining a condition (for example, time, a weather status, location information, a device status, or a device event) with a device action based on a user requirement and in which a corresponding action is executed when a preset condition is met.

However, a large quantity of scenes deployed on the host affects load of the host, causes a performance bottleneck of the host, slows down a response speed, or even breaks down the host.

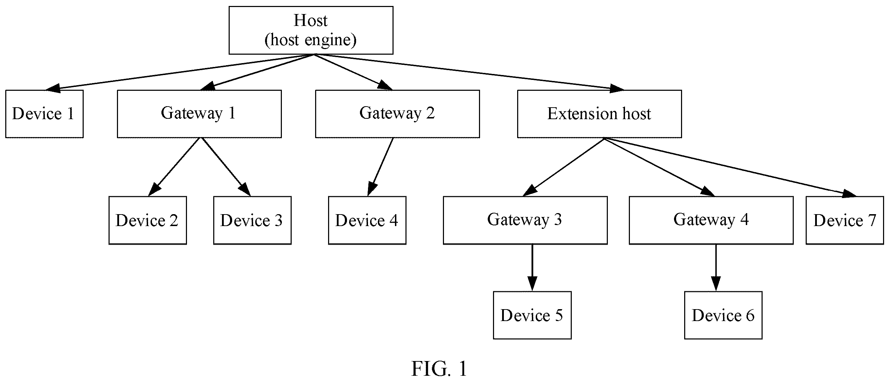

FIG. 1 is a diagram of an example of a conventional architecture of a smart home network. Refer to FIG. 1. The smart home network may include one host, one or more smart home devices (for example, a device 1 to a device 7), one or more gateways (for example, a gateway 1 to a gateway 4), and one or more extension hosts. The host may control the device 1, the gateway 1, the gateway 2, and the extension host.

The smart home network may also be referred to as a whole-house network, the host may also be referred to as a whole-house host, and the extension host may also be referred to as a whole-house extension host. This is not specially limited in this embodiment of this application.

It may be understood that, although not shown in FIG. 1, a cloud may also implement a function of the host. In addition, the host may alternatively control multiple extension hosts, and/or the host may alternatively control multiple smart home devices.

The gateway 1 may control the device 2 and the device 3, the gateway 2 may control the device 4, the extension host may control the gateway 3, the gateway 4, and the device 7, the gateway 3 may control the device 5, and the gateway 4 may control the device 6.

However, a large quantity of scenes deployed on the host affects load of the host, causes a performance bottleneck of the host, slows down a response speed, or even breaks down the host.

To resolve the foregoing problem, embodiments of this application provide a smart home scene deployment method, to improve scene execution performance.

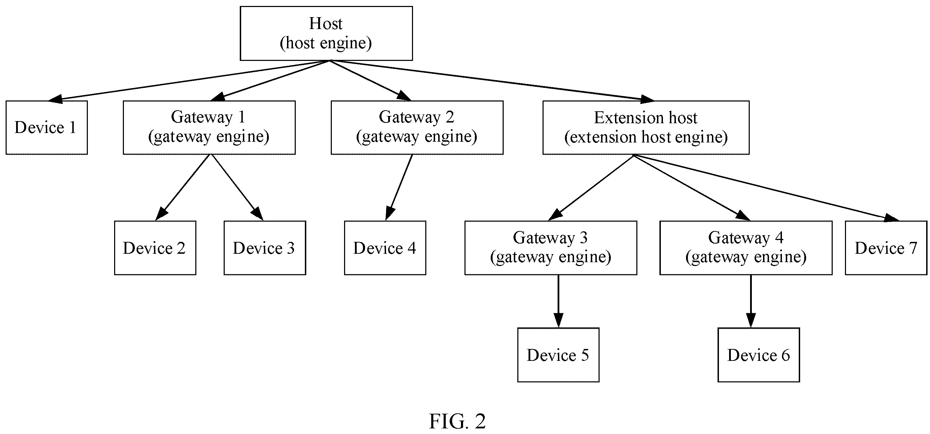

The smart home scene deployment method provided in embodiments of this application is described herein with reference to FIG. 2 to FIG. 13.

FIG. 2 is a diagram of an architecture of a whole-house network for smart home scene deployment according to an embodiment of this application. Refer to FIG. 2. A smart home network in this embodiment of this application may include one host, one or more extension hosts, one or more gateways (for example, a gateway 1 and a gateway 2), and one or more smart home devices (for ease of description, the smart home device is briefly referred to as a device in this specification). For example, the smart home devices may be a device 1 to a device 7.

The smart home device may include but is not limited to a smart wireless fidelity (wireless fidelity, Wi-Fi) device, a smart Bluetooth device, and a smart power line communication (Power Line Communication, PLC) device.

It may be understood that the host, the extension host, the gateway, and the smart home device may be understood as network elements or nodes in the smart home network. For description, the host is referred to as a first node, and the extension host and the gateway are referred to as second nodes below. The first node and the second nodes are nodes configured to execute a scene. The second node may include one or more extension hosts and/or one or more gateways. For example, the smart home network shown in FIG. 2 is used as an example. The host is the first node, and the gateway 1, the gateway 2, a gateway 3, a gateway 4, and the extension host are the second nodes.

The host has a host engine, the extension host has an extension host engine, and the gateway has a gateway engine. The engines are configured to drive execution of a scene. It may be understood that the engine may also be referred to as a scene engine or a scene driver. A scene may be deployed on one or more of the host engine, the extension host engine, and the gateway engine, so that load of the host can be shared by the gateway and the extension host. This improves scene execution performance, and avoids overloading of the host and affecting the scene execution performance because an excessively large quantity of scenes are deployed on the host.

It may be understood that a scene may include three types of segments: event (Event), condition (Condition), and action (Action).

Event is a manner of scene triggering. The manner of triggering a scene may be detecting a status change of a smart home device or responding to an operation. For example, turning on an air conditioner is used as an example, and turning on a switch is an event of turning on the air conditioner. Condition is a determining basis for scene execution, and the determining basis may be distance, time, temperature, status, or the like. For example, still using the example of turning on an air conditioner, the air conditioner can be turned on only when a temperature condition is met. Action is an action executed by a device when a condition is met. For example, still using the example of turning on an air conditioner, the device executes an action of turning on the air conditioner when a condition is met.

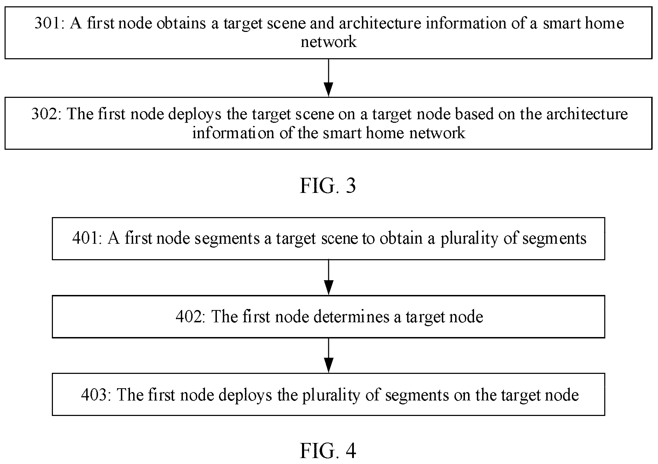

FIG. 3 is a schematic flowchart of an embodiment of a smart home scene deployment method according to this application. The method specifically includes the following steps.

Step 301: A first node obtains a target scene and architecture information of a smart home network.

Specifically, there are the following two triggering manners for the first node to obtain the target scene:

### Triggering manner 1

A user may perform an operation on the first node, to create a new scene (denoted as the target scene below). The first node may obtain the target scene in response to a scene creation request.

### Triggering manner 2

The user may perform version upgrade on the first node, to update an existing scene (denoted as the target scene below) in the first node. The first node may obtain the target scene in response to a version upgrade request on the first node. It may be understood that there may be multiple existing scenes in the first node. Any existing scene may be the target scene. In other words, the multiple existing scenes may be sequentially updated, and any scene that is being updated is the target scene.

The target scene may include an effective moment of the target scene, and the effective moment of the target scene is a moment at which the target scene is executed. It may be understood that, at the effective moment of the target scene, a node on which the target scene is deployed may determine an event and a condition, and after the event and the condition meet corresponding rules, execute an action corresponding to the target scene.

Table 1 shows an example of a correspondence between a scene and an effective moment.

**Table 1**

| Scene | Effective moment |
|---|---|
| Scene 1 | 8:00 |
| Scene 2 | 15:00 |
| Scene 3 | 18:00 |

Refer to Table 1. It is assumed that three scenes are created in the first node: a scene 1, a scene 2, and a scene 3. An effective moment of the scene 1 is 8:00, that is, the scene 1 may be executed at 8:00 every day or 8:00 on a day. An effective moment of the scene 2 is 15:00, that is, the scene 2 may be executed at 15:00 every day or 15:00 on a day. An effective moment of the scene 3 is 18:00, that is, the scene 3 may be executed at 18:00 every day or 18:00 on a day.

After the target scene is obtained, the architecture information of the smart home network may be further obtained.

The architecture information of the smart home network may include an association relationship between a node and a smart home device and an association relationship between nodes in the smart home network. The association relationship may include a connection relationship and a control relationship. In some embodiments, the association relationship may further include another relationship. This is not specially limited in this embodiment of this application. It may be understood that the architecture information of the smart home network may be represented in a form of a network topology diagram, or the architecture information of the smart home network may be represented in a form of a routing table. This is not specially limited in this embodiment of this application.

For example, the smart home network in FIG. 2 is used as an example. Table 2 shows the architecture information of the smart home network.

| Node | Adjacent node associated with the node |
|---|---|
| Host (first node) | Device 1, gateway 1, gateway 2, and extension host |
| Device 1 | Absent |
| Gateway 1 (second node) | Device 2 and device 3 |
| Device 2 | Absent |
| Device 3 | Absent |
| Gateway 2 (second node) | Device 4 |
| Device 4 | Absent |
| Extension host (second node) | Device 7, gateway 3, and gateway 4 |
| Device 7 | Absent |
| Gateway 3 (second node) | Device 5 |
| Device 5 | Absent |
| Gateway 4 (second node) | Device 6 |
| Device 6 | Absent |

Refer to Table 2. The device 1, the gateway 1, the gateway 2, and the extension host are connected to the host, and are controlled by the host. Therefore, adjacent nodes of the host are the device 1, the gateway 1, the gateway 2, and the extension host. The device 2 and the device 3 are connected to the gateway 1, and are controlled by the gateway 1. Therefore, adjacent nodes of the gateway 1 are the device 2 and the device 3. The device 4 is connected to the gateway 2, and is controlled by the gateway 2. Therefore, an adjacent node of the gateway 2 is the device 2. The device 7, the gateway 3, and the gateway 4 are connected to the extension host, and are controlled by the extension host. Therefore, adjacent nodes of the extension host are the device 7, the gateway 3, and the gateway 4. The device 5 is connected to the gateway 3, and is controlled by the gateway 3. Therefore, an adjacent node of the gateway 3 is the device 5. The device 6 is connected to the gateway 4, and is controlled by the gateway 4. Therefore, an adjacent node of the gateway 4 is the device 6.

In some optional embodiments, after the target scene and the architecture information of the smart home network are obtained, historical load information of the first node and/or historical load information of the second node may be further obtained. The historical load information of the first node may include load information of the first node in first historical duration, and the historical load information of the second node may include load information of the second node in second historical duration. The first historical duration may be the same as or different from the second historical duration. This is not specially limited in this embodiment of this application.

For example, the load information may be indicated by central processing unit (Central Processing Unit, CPU) usage and memory usage.

It may be understood that the CPU usage and the memory usage are merely examples for description, and do not constitute a limitation on this embodiment of this application. In some embodiments, the load information of the host may alternatively be indicated by another parameter.

A manner of obtaining the historical load information of the first node and the historical load information of the second node may be as follows: The historical load information of the first node may be obtained by collecting statistics about the load information of the first node in the first historical duration, or the historical load information of the second node may be obtained by collecting statistics about the load information of the first node in the second historical duration. The historical load information of the first node and the historical load information of the second node may be periodically obtained. For example, the load information is indicated by the CPU usage and the memory usage. The first node may record the CPU usage and the memory usage every second in a day. In this case, a curve of the historical load information of the first node that changes with time may be obtained by collecting load data of the first node in a day. Alternatively, the second node may record the CPU usage and the memory usage every second in a day. In this case, a curve of the historical load information of the second node that changes with time may be obtained by collecting load data of the second node in a day.

In some optional embodiments, the first node may further obtain ECA information and spatial attribute information that correspond to the target scene.

The ECA refers to at least two types of segments in an event (Event), a condition (Condition), and an action (Action). For example, a scene may include two types of segments: an event and an action; or a scene may include three types of segments: an event, a condition, and an action.

The ECA information in a scene may include a critical ECA. The critical ECA is an ECA indicating whether a scene is successfully executed.

In some optional embodiments, the ECA information in the scene may further include a non-critical ECA, and the non-critical ECA indicates an optional ECA.

It may be understood that the critical ECA may include one or more ECAs, and the non-critical ECA may include one or more ECAs. The critical ECA is an ECA that needs to be executed in an execution process of a scene. In other words, it can be considered that a scene is successfully executed only when all ECAs in critical ECAs in the scene are successfully executed. If any of the critical ECAs in the scene fails to be executed, execution of the scene is considered to be failed. Whether a non-critical ECA is successfully executed or not does not affect a success or failure in executing the scene.

For example, a movie watching scene is used as an example. An event in the scene may be turning on a movie watching switch, and actions may include closing a curtain, dimming a main lamp, turning on a television, playing audio via a speaker, and the like. It can be learned that dimming the main lamp and turning on the television in the scene affect movie watching of a user, and therefore, dimming the main lamp and turning on the television may be set as critical ECAs. However, closing the curtain and playing audio via the speaker do not affect the movie watching of the user, and therefore, closing the curtain and playing audio via the speaker may be set as non-critical ECAs.

The spatial attribute information in a scene indicates space from which a device used in the scene comes or space in which a main action area of the scene is located.

For example, a reception scene is used as an example. Actions in the reception scene may include turning on a living room lamp, turning on an entryway lamp, and turning on a porch lamp. Although the entryway lamp and the porch lamp are not in the living room, a spatial attribute of the reception scene is still the living room.

In some optional embodiments, the user may alternatively create a scene by using a cloud host. This is not specially limited in this embodiment of this application. The cloud host may be a host on a cloud side.

Step 302: The first node deploys the target scene on a target node based on the architecture information of the smart home network.

Specifically, after obtaining the target scene and the architecture information of the smart home network, the first node may deploy the target node on the target node based on the architecture information of the smart home network.

The target node may be the first node and/or the second node. As described above, the second node may include one or more extension hosts and/or one or more gateways.

It should be noted that deployment in this embodiment of this application may also be referred to as distribution or configuration. To be specific, after determining the target node, the first node may distribute or configure the target scene to the target node. Deployment does not mean execution of the target scene. In other words, at a moment of deployment of the target scene, the target scene is not executed, and the target scene is executed at the effective moment indicated by scene information.

In some optional embodiments, the first node may further deploy the target node on the target node based on the historical load information of the first node and/or the historical load information of the second node and the architecture information of the smart home network.

For example, a load value corresponding to the effective moment of the target scene may be predicted based on the historical load information of the first node. If the load value corresponding to the effective moment of the target scene on the first node is high, it indicates that the first node is overloaded at the effective moment of the target scene, and no more scenes can be deployed. In this case, the target scene may be deployed on the second node, to reduce burden of the first node. Alternatively, if the load value corresponding to the effective moment of the target scene on the first node is low, the target scene may be deployed on the first node. Alternatively, a load value corresponding to the effective moment of the target scene may be predicted based on the historical load information of the second node. If the load value corresponding to the effective moment of the target scene on any node in the second node is high, it indicates that the node is overloaded at the effective moment of the target scene, and no scene can be deployed. In this case, the target scene may be deployed on another node in the second node, to balance the load.

In some optional embodiments, the target scene may be further deployed based on a scene deployed on the first node.

It may be understood that, with continuous deployment of scenes on the first node, there may be some deployed scenes. For the first node, if a large quantity of scenes are executed at a same moment, some scenes may be suspended due to preemption or some scenes may fail to be executed, which affects user experience. Therefore, the first node may further deploy the target scene based on the scene deployed on the first node.

For example, a concurrency upper limit may be preset for the first node. The concurrency upper limit indicates a threshold of a quantity of scenes that can be executed by the host at a same moment. For example, the threshold may be a first concurrency threshold. When the target scene is deployed, if a quantity of scenes that are on the first node and that are executed at a same execution moment as the target scene reaches the concurrency upper limit, for example, is greater than or equal to the first concurrency threshold, the target scene may be deployed on the second node. Alternatively, when the target scene is deployed, if a quantity of scenes that are on the first node and that are executed at the same execution moment as the target scene does not reach the concurrency upper limit, for example, is less than the first concurrency threshold, the target scene may be deployed on the first node.

In this embodiment of this application, the target scene is deployed based on the architecture of the smart home network. This helps improve scene execution performance.

It should be noted that, in this embodiment of this application, the host in the smart home network is used as an example for description, but this does not constitute a limitation on this embodiment of this application. In some embodiments, the cloud host may also implement the foregoing method.

The foregoing describes deployment of the entire scene by using FIG. 3 as an example. It may be understood that a scene usually includes at least two types of segments in the ECA. For example, a scene includes an event and an action, or a scene includes an event, a condition, and an action. Therefore, to balance the load of the first node and the load of the second node in the whole house, the scene may be further segmented to obtain multiple segments, and the multiple segments obtained through segmentation may be deployed on the first node and/or the second node.

FIG. 4 is a schematic flowchart of another embodiment of a smart home scene deployment method according to this application. Step 302 specifically includes the following steps.

Step 401: A first node segments a target scene to obtain multiple segments.

Specifically, because the target scene may include at least two types of segments in an event, a condition, and an action, the scene may be segmented based on the event, the condition, and the action, to obtain the multiple segments.

One or more events may be used as one event segment, one or more conditions may be used as one condition segment, or one or more actions may be used as one action segment.

For example, it is assumed that an event is E, actions include A1, A2, and A3, and devices that execute the actions A1, A2, and A3 are controlled by a same gateway. In this case, the event E may be used as an event segment, and a combination of A1, A2, and A3 may be used as an action segment.

For another example, it is assumed that an event is E1 or E2, actions include A1, A2, and A3, and devices that execute the actions A1, A2, and A3 are controlled by a same gateway. In this case, the event E1 or E2 may be independently used as an event segment, and a combination of A1, A2, and A3 may be used as an action segment.

For another example, it is assumed that an event is E, a condition is C1 or C2, actions are A1, A2, and A3, and devices that execute the actions A1, A2, and A3 are controlled by a same gateway. In this case, the event E may be used as an event segment, the condition C1 or C2 may be independently used as a condition segment, and a combination of A1, A2, and A3 may be used as an action segment.

For another example, it is assumed that an event is E, conditions are C1 and C2, actions are A1, A2, and A3, and devices that execute the actions A1, A2, and A3 are controlled by a same gateway. In this case, the event E may be used as an event segment, a combination of the conditions C1 and C2 may be used as a condition segment, and a combination of A1, A2, and A3 may be used as an action segment.

For another example, it is assumed that an event is E, actions include A1, A2, and A3, and the actions A1, A2, and A3 have a dependency relationship like sequential execution, cyclic execution, condition branching, or input/output. In this case, the event E may be used as an event segment, and a combination of A1, A2, and A3 may be used as an action segment.

Step 402: The first node determines a target node.

Specifically, after obtaining the multiple segments, the first node may determine the target node based on architecture information of a smart home network, to deploy the multiple segments on the target node.

There may be one or more target nodes, and the target node may be the first node and/or a second node. Therefore, multiple segments of a scene may be distributed to the first node and/or the second node.

For example, one or more segments in the target scene may be deployed on the first node, and/or one or more segments in the target scene may be deployed on the second node, to reduce burden of the first node, and improve system performance.

In some optional embodiments, a manner of determining the target node may be selecting a shared node from one or more shared nodes as the target node. In other words, before the target node is determined, shared nodes corresponding to the multiple segments of the target scene may be first found. The shared node indicates a node that can control devices corresponding to the multiple segments of the target scene. It may be understood that the shared node may also be referred to as a common node.

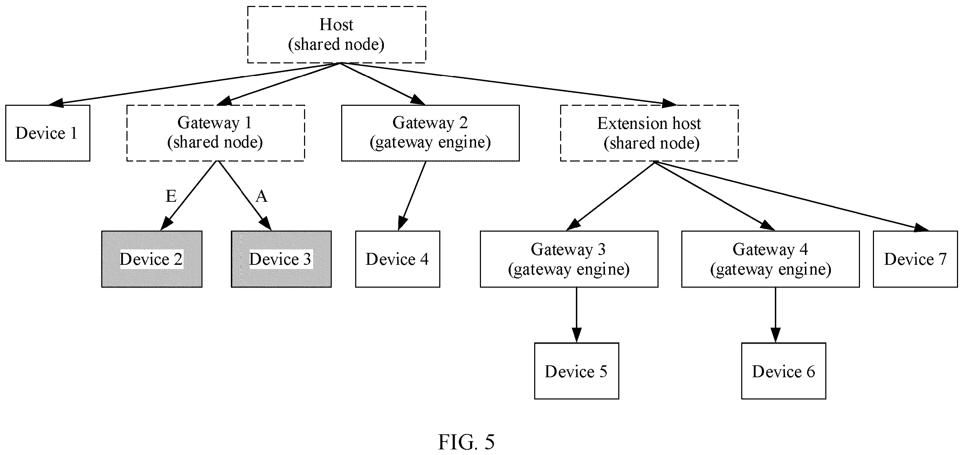

For example, the network topology shown in FIG. 2 is used as an example. FIG. 5 is a diagram of an example of an embodiment of the shared node. It is assumed that a scene includes two segments: an event segment and an action segment. The event segment includes an event E, and a device corresponding to the event E is the device 2. The action segment includes an action A, and a device corresponding to the action A is the device 3. Because both the device 2 and the device 3 are controlled by the gateway 1, a shared node corresponding to the event segment and the action segment may be the gateway 1, that is, the gateway 1 may be a shared node in the scene.

In some optional embodiments, the embodiment shown in FIG. 5 is used as an example. Because the host is an upper-level node of the gateway 1, and may also control the device 2 and the device 3, the host may also be the shared node of the event segment and the action segment, that is, the host may also be the shared node in the scene.

In some optional embodiments, the embodiment shown in FIG. 5 is used as an example. The extension host may also control the device 2 and the device 3 in a routing manner. For example, the extension host may indirectly control the device 2 and the device 3 through the gateway 1. Therefore, the extension host may also be used as the shared node of the action segment.

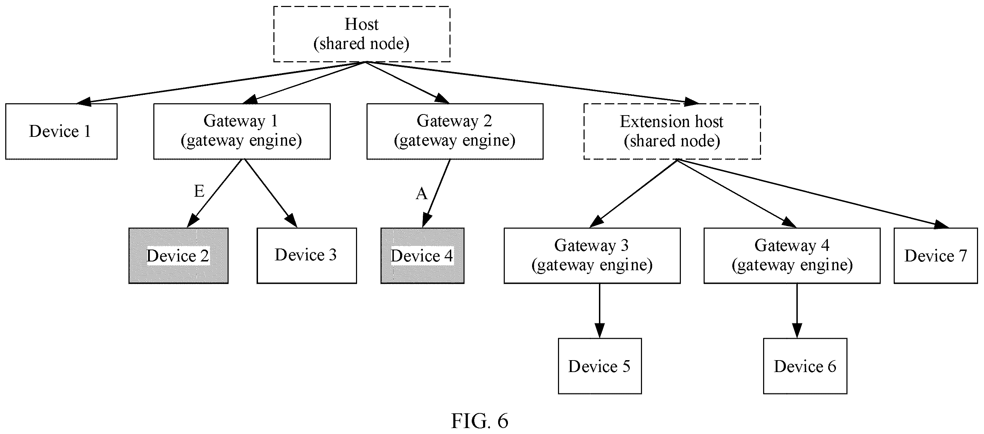

For another example, the network topology shown in FIG. 2 is still used as an example. FIG. 6 is a diagram of an example of another embodiment of the shared node. It is assumed that a scene includes two segments: an event segment and an action segment. The event segment includes an event E, and a device corresponding to the event E is the device 2. The action segment includes an action A, and a device corresponding to the action A is the device 4. Because the device 2 is controlled by the gateway 1, and the device 4 is controlled by the gateway 2, the gateway 1 cannot control the device 4, and the gateway 2 cannot control the device 2. Therefore, the gateway 1 or the gateway 2 cannot be used as a shared node of the event segment and the action segment, that is, the gateway 1 or the gateway 2 cannot be used as a shared node in the scene. Because the host or the extension host may control the device 2 and the device 4, the shared node of the event segment and the action segment may be the host or the extension host, that is, the shared node in the scene may be the host or the extension host.

In some optional embodiments, the shared node may alternatively be indicated in a form of a shared node group. For example, the shared node may be a shared node group including multiple nodes.

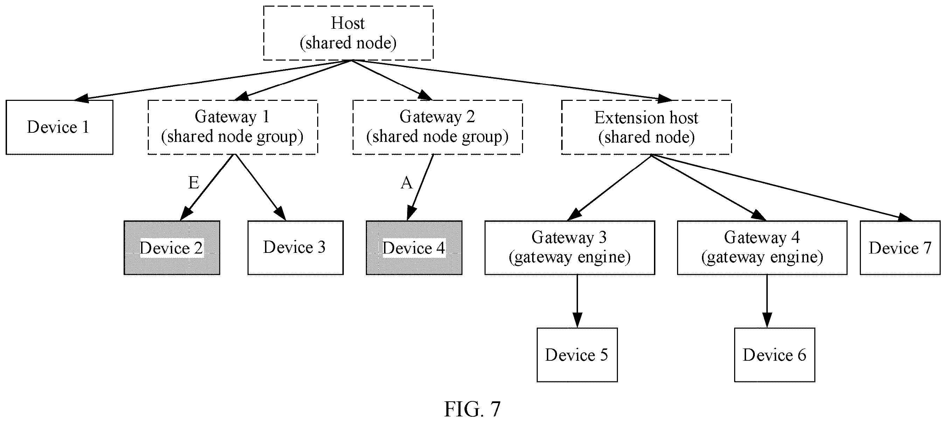

For example, the embodiment shown in FIG. 6 is used as an example. FIG. 7 is a diagram of an example of still another embodiment of the shared node. Although the gateway 1 or the gateway 2 cannot be used as the shared node of the event segment and the action segment, the gateway 1 and the gateway 2 form a shared node group, so that the device 2 and the device 4 can be controlled by using the shared node group, that is, the shared node group may also be the shared node in the scene. For example, the shared node group={gateway 1, gateway 2}.

After the shared node is determined, the target node may be determined based on the shared node.

A principle for determining the target node may include one or more of the following manners. In actual application, the following manners may be used in any combination. This is not specially limited in this embodiment of this application.

Manner 1: The target node that supports a service capability required by the segment in the target scene is preferably selected from the shared nodes.

The service capability required by the segment may include but is not limited to capabilities such as delayed and cyclic execution and timing of the segment. It may be understood that some nodes have strong capabilities and support the service capability required by the segment, and the node that supports the required service capability may be preferably selected as the target node. However, some nodes have weak capabilities and may not support the service capability required by the segment, and a node that does not support the required service capability may not be selected as the target node.

Manner 2: The target node whose concurrency upper limit meets a preset condition is preferably selected from the shared nodes.

One or more scenes may be deployed on one node, and each scene has a corresponding execution moment. Because a concurrency capability of the node is limited, for example, when a scene is being executed, an execution request of another scene having a same execution moment may be rejected. Consequently, execution effect of the scene is affected, and user experience is affected. A trigger condition may include but is not limited to a same temperature, a same moment, a same weather, and the like. Therefore, when the target node is selected, the node whose concurrency upper limit meets the preset condition may be preferably selected from the shared nodes as the target node. For example, a quantity of scenes that are on the target node and that have a same execution moment as the target scene is less than a second concurrency threshold, and the second concurrency threshold may be a concurrency upper limit of the target node.

Manner 3: All segments including critical ECAs in the target scene are preferably deployed on a same target node.

It may be understood that, if multiple segments including critical ECAs are deployed on multiple nodes, some critical ECAs may be successfully executed, and some critical ECAs may fail to be executed. Consequently, execution of the entire scene fails, and user experience is affected. To ensure that all the critical ECAs are successfully executed, that is, to ensure integrity and atomicity of the scene, all the segments including the critical ECAs in the target scene may be preferably deployed on the same target node.

Manner 4: The target node with low load is preferably selected from the shared nodes.

It may be understood that each of to-be-selected nodes has historical load information of the node. For a specific manner of obtaining the historical load information of the to-be-selected node, refer to the related descriptions of the historical load information of the first node and the historical load information of the second node in the foregoing embodiment. Details are not described herein again.

A load value corresponding to an effective moment may be obtained based on the historical load information. If a load value corresponding to an effective moment of the target scene on the to-be-selected node is low, for example, the load value corresponding to the effective moment of the target scene is less than a load threshold, a node whose load value is less than the load threshold may be preferably used as the target node. If the load value corresponding to the effective moment of the target scene on the to-be-selected node is high, for example, the load value corresponding to the effective moment of the target scene is greater than or equal to the load threshold, a node whose load value is greater than or equal to the load threshold may not be used as the target node.

For example, if the target scene is a scene in which the user gets up in the morning, the to-be-selected node may need to execute a large quantity of tasks in the morning, and load is heavy, the target scene is not suitable to be deployed on the to-be-selected node with heavy load.

Manner 5: The target node close to a device controlled by the target scene is preferably selected from the shared nodes.

As described above, a shorter distance between the target node and the device controlled by the target scene indicates a shorter delay, higher execution efficiency, and better user experience. Therefore, the target node close to the device controlled by the target scene may be preferably selected from the shared nodes. For a specific manner of calculating the distance between the target node and the device, refer to the related descriptions in the foregoing embodiment. Details are not described herein again.

For example, a smart home network topology and spatial location information of the smart home network topology may be stored in the first node in advance. When the target scene is deployed, a distance between the device controlled by the target scene and the first node and a distance between the device controlled by the target scene and the second node may be calculated, to deploy the target scene on a node close to the device controlled by the target scene. For example, if the gateway is close to the device controlled by the target scene, the target scene may be deployed on the gateway. Alternatively, if the extension host is close to the device controlled by the target scene, the target scene may be deployed on the extension host.

Then, the network topology shown in FIG. 2 is used as an example to describe determining of the target node.

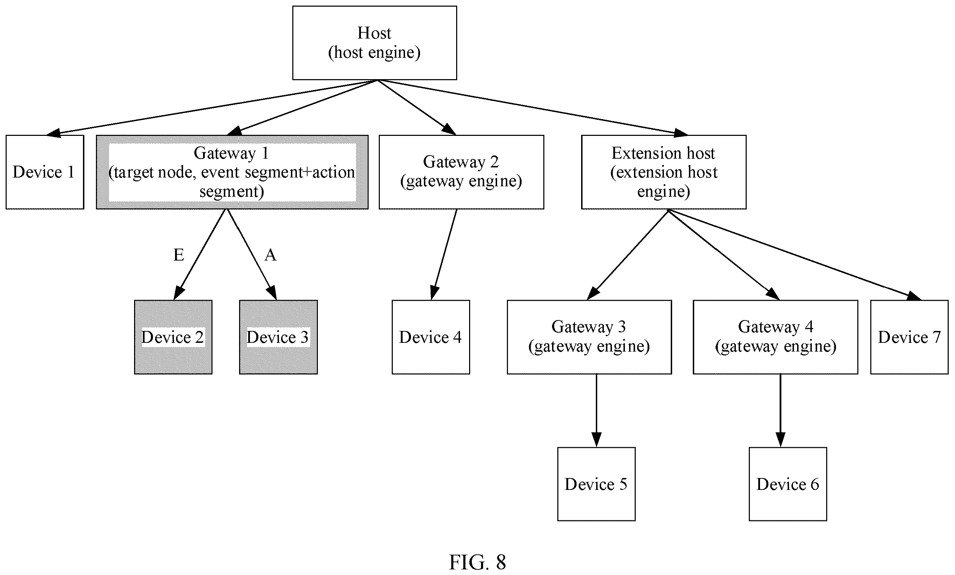

For example, refer to FIG. 8. It is assumed that a scene includes an event segment and an action segment. The event segment includes an event E, and the event E is turning on the device 2. The action segment includes an action A, and the action A is turning on the device 3. Because the device 2 corresponding to the event E is controlled by the gateway 1, and the device 3 corresponding to the action A is controlled by the gateway 1, a shared node corresponding to the event segment and the action segment may be the gateway 1, the host, or the extension host, that is, a shared node in the scene may be the gateway 1, the host, or the extension host.

It is assumed that the gateway 1 meets the principles in the manner 1 to the manner 5. For example, the gateway 1 is a node closest to the device 2 and the device 3, execution of the device 2 and the device 3 does not require service capabilities such as delaying and cycling, no other scene is deployed on the gateway 1, and load corresponding to an effective moment of the target scene is low. In this case, the gateway 1 may be used as the target node, that is, the entire scene may be deployed on the gateway 1, that is, both the event segment and the action segment are deployed on the gateway 1.

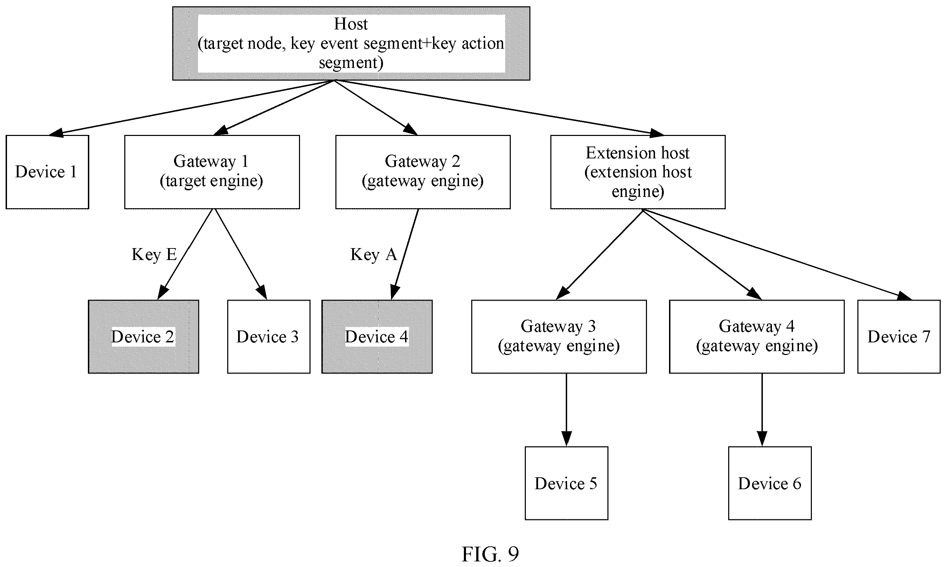

For another example, refer to FIG. 9. It is assumed that a scene includes a critical event segment and a critical action segment. The critical event segment includes a critical event E, and the critical event E is turning on the device 2. The critical action segment includes a critical action A, and the critical action A is turning on the device 4.

Because the device 2 corresponding to the critical event E is controlled by the gateway 1, the device 4 corresponding to the critical action A is controlled by the gateway 2, and both the critical event E and the critical action A are critical ECAs, the critical event segment and the critical action segment cannot be deployed on different nodes. Specifically, in this embodiment, the critical event segment cannot be deployed on the gateway 1, and the critical action segment cannot be deployed on the gateway 2 through a shared node group. To deploy the critical event segment and the critical action segment on a same node, the critical event segment and the critical action segment may be deployed on a shared node like the host or the extension host, that is, the host or the extension host is used as the target node. In this embodiment, it is assumed that the host meets the principles in the manner 1 to the manner 5. In this case, the critical event segment and the critical action segment may be deployed on the host, that is, the entire scene is deployed on the host.

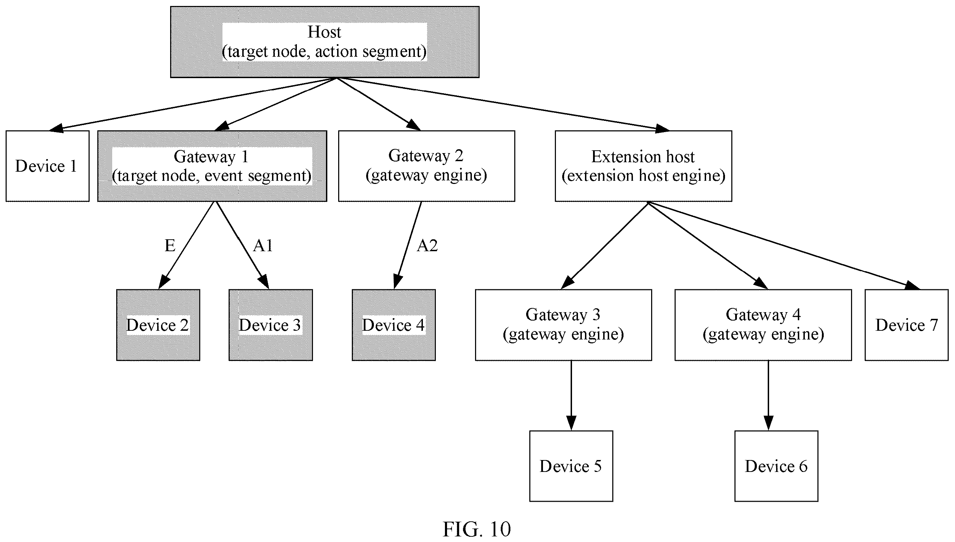

For another example, refer to FIG. 10. It is assumed that a scene includes an event segment and an action segment. The event segment includes an event E, and the event E is turning on the device 2. The action segment includes an action A1 and an action A2, the action A1 is turning on the device 3, and the action A2 is turning on the device 4.

Because the device 2 corresponding to the event E is controlled by the gateway 1, and the device 3 and the device 4 corresponding to the action A1 and the action A2 are respectively controlled by the gateway 1 and the gateway 2, a shared node corresponding to the event segment and the action segment may be the host or the extension host; or the shared node corresponding to the event segment and the action segment may be a shared node group including the gateway 1 and the host; or the shared node corresponding to the event segment and the action segment may be a shared node group including the gateway 1 and the extension host.

It is assumed that the host or the extension host is selected as the target node. In this case, the event segment and the action segment may be deployed on the host or the extension host, that is, the entire scene is deployed on the host or the extension host.

Alternatively, it is assumed that the shared node group including the gateway 1 and the host is selected as the target node. In this case, the event segment may be deployed on the gateway 1, and the action segment may be deployed on the host.

Alternatively, it is assumed that the shared node group including the gateway 1 and the extension host is selected as the target node. In this case, the event segment may be deployed on the gateway 1, and the action segment may be deployed on the extension host.

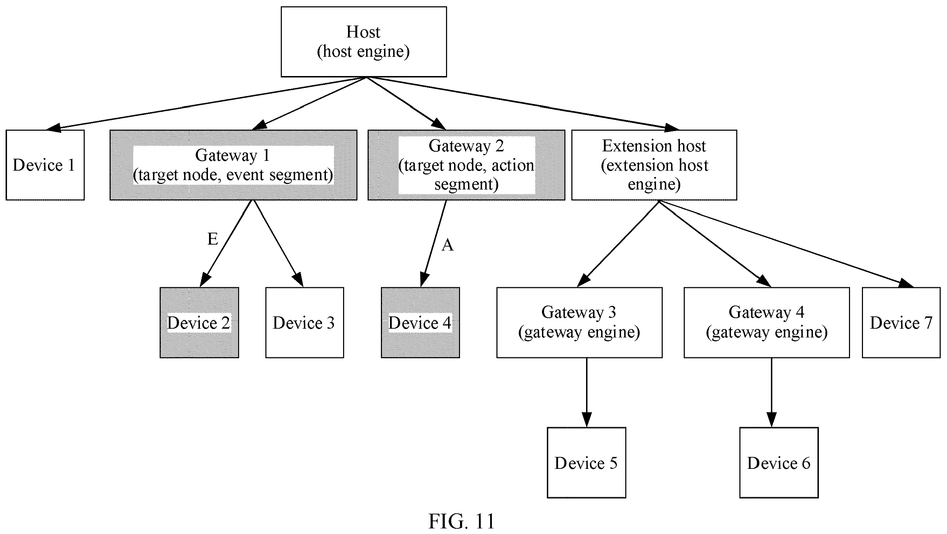

For another example, refer to FIG. 11. It is assumed that a scene includes an event segment and an action segment. The event segment includes an event E, and the event E is turning on the device 2. The action segment includes an action A, the action A is turning on the device 4.

Because the device 2 corresponding to the event E is controlled by the gateway 1, and the device 4 corresponding to the action A is controlled by the gateway 2, a shared node corresponding to the event segment and the action segment may be a shared node group, the host, or the extension host, where the shared node group={gateway 1, gateway 2}. It is assumed that the shared node group meets the principles in the manner 1 to the manner 5. In this case, the shared node group may be used as the target node, and therefore, the event segment may be deployed on the gateway 1, and the action segment may be deployed on the gateway 2.

It may be understood that the foregoing embodiment is described by using only an example in which the shared node group includes two nodes, but does not constitute a limitation on this embodiment of this application. In some embodiments, a quantity of nodes included in the shared node group may alternatively be greater than 2.

Step 403: The first node deploys the multiple segments on the target node.

Specifically, after the target node is determined, the multiple segments of the target scene may be deployed on the determined target node.

For a specific manner of deploying the multiple segments in the target scene, refer to the related descriptions in the embodiments shown in FIG. 8 to FIG. 11. Details are not described herein again.

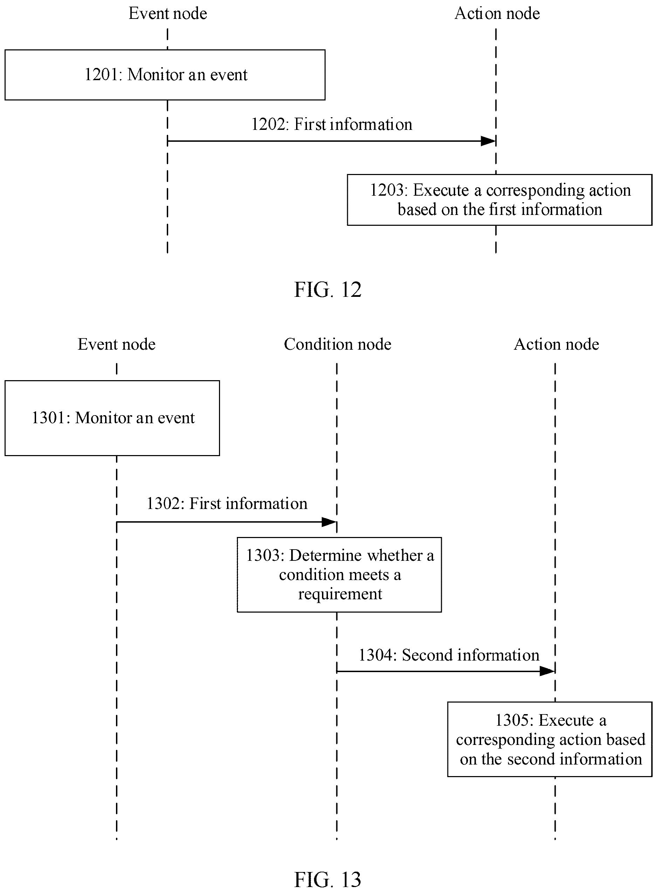

The foregoing describes segmentation and deployment of the scene by using FIG. 4 to FIG. 11 as examples. Next, the following describes execution of the scene by using FIG. 12 and FIG. 13 as examples.

FIG. 12 is a schematic flowchart of still another embodiment of a scene deployment method according to this application. In the embodiment shown in FIG. 12, a scene may include an event and an action. Because a segment corresponding to the event and a segment corresponding to the action in the scene may be deployed on different nodes, after an event occurs, a node (denoted as an event node below for ease of description) on which the segment corresponding to the event is located may notify, of the event, a node on which the segment corresponding to the action is located, so that the node (denoted as an action node below for ease of description) on which the segment corresponding to the action is located can execute a corresponding action. Specifically, the following steps are included.

Step 1201: The event node monitors the event.

Specifically, the event node may include a first node, or the event node may include a second node. This is not specially limited in this embodiment of this application.

The event may include a status change event of a target smart home device. In some embodiments, the event may further include another type of event. This is not specially limited in this embodiment of this application. The target smart home device may be a smart home device controlled by the event node in a target scene.

There may be one or more event nodes. This is not specially limited in this embodiment of this application.

One or more event segments may be deployed on the event node, and one event segment may include one or more events. The event node may monitor occurrence of the event. For a specific definition of the event, refer to the related descriptions in the foregoing embodiment. Details are not described herein again.

Step 1202: The event node sends first information to the action node in response to the detected event.

Specifically, the action node may include a first node, or the action node may include a second node. This is not specially limited in this embodiment of this application.

There may be one or more action nodes. This is not specially limited in this embodiment of this application.

It may be understood that a subscription relationship may be established between the event node and the action node in advance, so that after detecting the event, the event node can send the first information to the subscribed action node. The first information indicates that the detected event already meets a rule corresponding to the event segment in the target scene.

For example, an action node 1 and an action node 2 subscribe to an event node 1 and an event node 2. After detecting the event, the event node 1 may send the first information to the action node 1 and the action node 2. Alternatively, after detecting the event, the event node 2 may send the first information to the action node 1 and the action node 2.

Step 1203: The action node executes the corresponding action in response to the received first information.

Specifically, the action node may receive the first information sent by the event node. In response to the received first information, the action node may execute the action corresponding to the target scene.

FIG. 13 is a schematic flowchart of yet another embodiment of a smart home scene deployment method according to this application. In the embodiment shown in FIG. 13, a scene may include an event, a condition, and an action. Because a segment corresponding to the event, a segment corresponding to the condition, and a segment corresponding to the action in the scene may be deployed on different nodes, after an event in the event node occurs, the event may be notified to the condition node; and after determining that a condition meets a requirement, the condition node may indicate the action node to execute a corresponding action. Specifically, the following steps are included.

Step 1301: The event node monitors the event.

For a specific implementation of step 1301, refer to the related descriptions of step 1201 in the foregoing embodiment. Details are not described herein again.

Step 1302: The event node sends first information to the condition node in response to the detected event.

Specifically, the condition node may include a first node, or the condition node may include a second node. This is not specially limited in this embodiment of this application.

There may be one or more condition nodes. This is not specially limited in this embodiment of this application.

It may be understood that a subscription relationship may be established between the event node and the condition node in advance, so that after detecting the event, the event node can send the first information to the condition node.

For example, the condition node subscribes to an event node 1 and an event node 2. After detecting the event, the event node 1 may send the first information to the condition node Alternatively, after detecting the event, the event node 2 may send the first information to the condition node.

Step 1303: The condition node determines whether the condition meets the requirement in response to the received first information.

Specifically, the condition node may receive the first information sent by the event node. In response to the received first information, the condition node may determine whether the condition meets the requirement, for example, whether the condition meets a rule set in the condition segment. For a specific definition of the condition, refer to the related descriptions in the foregoing embodiment. Details are not described herein again.

Step 1304: The condition node sends second information to the action node in response to the condition determined to meet the requirement.

Specifically, after determining that the condition meets the requirement, the condition node may send the second information to the action node. The second information indicates that the condition already meets the rule corresponding to the condition segment in a target scene.

It may be understood that, if finding, through determining, that the condition does not meet the requirement, the condition node may not send the second information to the action node.

For example, an action node 1 and an action node 2 subscribe to the condition node. After receiving the first information, the condition node may determine whether the condition meets the requirement. If the condition node determines that the condition meets the requirement, the condition node may send the second information to the action node 1 and the action node 2. Alternatively, if the condition node determines that the condition does not meet the requirement, the condition node may not send the second information to the action node 1 and the action node 2.

Step 1305: In response to the received second information, the action node executes the corresponding action based on the second information.

Specifically, the action node may receive the second information sent by the condition node. In response to the received second information, the action node may execute the corresponding action based on the second information.

In some optional embodiments, the action node may receive the second information sent by multiple condition nodes. If a determining basis for the action node to execute the action is that all subscribed condition nodes send the second information, the action node can execute the corresponding action only after receiving the second information sent by all the subscribed condition nodes.

Alternatively, if the determining basis for the action node to execute the action is that any one of all the subscribed condition nodes sends the second information, the action node may execute the corresponding action after receiving the second information sent by the any one of all the subscribed condition nodes.

For example, the action node subscribes to a condition node 1 and a condition node 2. It is assumed that a basis for execution of the action segment is that the action node can execute the corresponding action only after receiving the second information of the condition node 1 and the condition node 2. In this case, the action node needs to wait for receiving the second information of the condition node 1 and the condition node 2. If the action node receives only the second information of the condition node 1 or the condition node 2, the action node cannot execute the corresponding action.

Alternatively, it is assumed that the basis for execution of the action segment is that the action node can execute the corresponding action only after receiving the second information of the condition node 1 or the condition node 2. In this case, the action node can execute the corresponding action after receiving the second information of the condition node 1 or the condition node 2 without waiting until the second information of both the condition node 1 and the condition node 2 is successfully received.

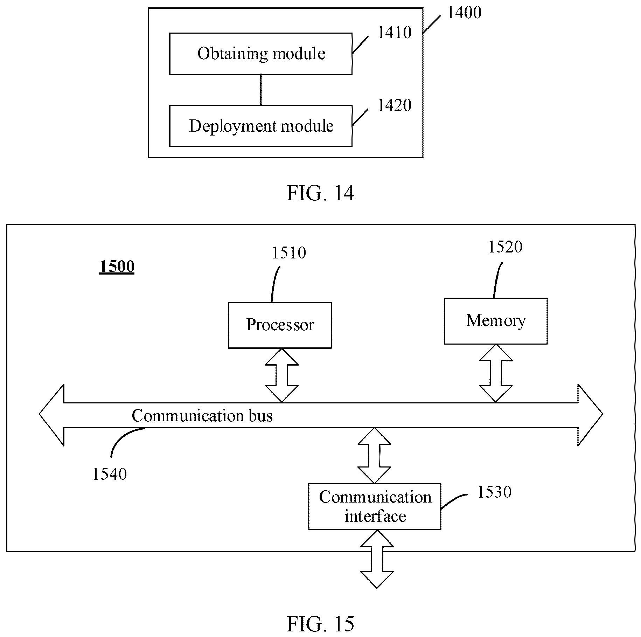

FIG. 14 is a diagram of a structure of an embodiment of a smart home scene deployment apparatus according to this application. As shown in FIG. 14, the smart home scene deployment apparatus 1400 is used in a first node, and the smart home scene deployment apparatus 1400 may include an obtaining module 1410 and a deployment module 1420.

The obtaining module 1410 is configured to obtain a target scene and architecture information of a smart home network; and

The deployment module 1420 is configured to deploy the target scene on a target node based on the architecture information of the smart home network.

The target node includes the first node and/or a second node, the first node is a host in the smart home network, and the second node includes an extension host and/or a gateway in the smart home network.

In a possible implementation, the deployment module 1420 is further configured to: obtain historical load information of the first node and/or historical load information of the second node; and
deploy the target scene on the target node based on the historical load information of the first node and/or the historical load information of the second node and the architecture information of the smart home network.

In a possible implementation, the target scene includes an effective moment, the historical load information of the first node includes load information that is of the first node and that corresponds to the effective moment, and the historical load information of the second node includes load information that is of the second node and that corresponds to the effective moment.

In a possible implementation, the target scene includes multiple pieces of information in event information, condition information, and action information, and the deployment module 1420 is further configured to: obtain multiple segments based on the target scene, where any one of the multiple segments includes an event segment, a condition segment, or an action segment in the target scene; and
deploy the multiple segments on the target node based on the architecture information of the smart home network.

In a possible implementation, the target node includes an event node and an action node, the event segment in the target scene is deployed on the event node, the action segment in the target scene is deployed on the action node, and the smart home scene deployment apparatus 1400 further includes:
an execution module 1430, configured to: monitor, for the event node, an event; and
send, for the event node, first information to the action node in response to the detected event, for the action node to execute, based on the first information, an action corresponding to the action segment in the target scene.

The first information indicates that the detected event already meets a rule corresponding to the event segment in the target scene.

In a possible implementation, the target node includes an event node, a condition node, and an action node, the event segment in the target scene is deployed on the event node, the condition segment in the target scene is deployed on the condition node, the action segment in the target scene is deployed on the action node, and the execution module 1430 is further configured to: monitor, for the event node, an event;
send, for the event node, first information to the condition node in response to the detected event, for the condition node to determine, based on the first information, whether a condition meets a rule corresponding to the condition segment in the target scene, and after the condition meets the rule corresponding to the condition segment in the target scene, send, for condition node, second information to the action node, for the action node to execute, based on the second information, an action corresponding to the action segment in the target scene.

The first information indicates that the detected event already meets a rule corresponding to the event segment in the target scene, and the second information indicates that the condition already meets the rule corresponding to the condition segment in the target scene.

In a possible implementation, the event includes a status change event of a target smart home device, and the target smart home device is a smart home device controlled by the event node in the target scene.

In a possible implementation, the deployment module 1420 is further configured to: obtain scene information deployed on the first node; and
deploy the target scene on the target node based on the scene information deployed on the first node and the architecture information of the smart home network.

The smart home scene deployment apparatus 1400 provided in the embodiment shown in FIG. 14 may be configured to perform the technical solutions in the method embodiments in this application. For an implementation principle and technical effect of the smart home scene deployment apparatus 1400, further refer to the related descriptions in the method embodiments.

It should be understood that division into the modules of the smart home scene deployment apparatus 1400 shown in FIG. 14 is merely logical function division, and in an actual implementation, a part or all of the modules may be integrated into one physical entity, or may be physically separated. In addition, all of the modules may be implemented in a form of software invoked by using a processing element or may be implemented in a form of hardware. Alternatively, some modules may be implemented in the form of software invoked by using the processing element, and some modules are implemented in the form of hardware. For example, a detection module may be an independently disposed processing element, or may be integrated into a chip of an electronic device for implementation. An implementation of another module is similar to the implementation of the detection module. In addition, a part or all of these modules may be integrated together, or may be implemented independently. In an implementation process, steps in the foregoing methods or the foregoing modules may be implemented by using a hardware integrated logical circuit in the processing element, or by using instructions in a form of software.

For example, the foregoing modules may be one or more integrated circuits configured to implement the foregoing method, for example, one or more application-specific integrated circuits (Application-Specific Integrated Circuit, hereinafter briefly referred to as ASIC), one or more microprocessors (Digital Signal Processor, hereinafter briefly referred to as DSP), or one or more field programmable gate arrays (Field Programmable Gate Array, hereinafter briefly referred to as FPGA). For another example, these modules may be integrated together and implemented in a form of a system-on-a-chip (System-on-a-Chip, hereinafter briefly referred to as SOC).

FIG. 15 is a diagram of an example of a structure of an electronic device 1500.

The electronic device 1500 may include at least one processor and at least one memory communicatively connected to the processor. The memory stores program instructions that can be executed by the processor, and the processor can perform, by invoking the program instructions, the method provided in embodiments shown in this specification.

FIG. 15 is a block diagram of an example of the electronic device 1500 suitable for implementing implementations of this specification. The electronic device 1500 shown in FIG. 15 is merely an example, and should not constitute any limitation on a function and a use scope of embodiments of this specification.

As shown in FIG. 15, components of the electronic device 1500 may include but are not limited to one or more processors 1510, a memory 1520, a communication bus 1540 that connects different system components (including the memory 1520 and the processor 1510), and a communication interface 1530.

The communication bus 1540 indicates one or more of several types of bus structures, and includes a memory bus or a memory controller, a peripheral bus, a graphics acceleration port, a processor, or a local bus that uses any one of multiple bus structures. For example, these architectures include but are not limited to an industry standard architecture (Industry Standard Architecture, hereinafter briefly referred to as ISA) bus, a micro channel architecture (Micro Channel Architecture, hereinafter briefly referred to as MAC) bus, an enhanced ISA bus, a video electronics standards association (Video Electronics Standards Association, hereinafter briefly referred to as VESA) local bus, and a peripheral component interconnection (Peripheral Component Interconnection, hereinafter briefly referred to as PCI) bus.

The electronic device 1500 typically includes multiple types of computer system-readable media. These media may be any available media that can be accessed by the device, including volatile and non-volatile media, and removable and non-removable media.

The memory 1520 may include a computer system-readable medium in a form of a volatile memory, for example, a random access memory (Random Access Memory, hereinafter briefly referred to as RAM) and/or a cache. The device may further include another removable/non-removable volatile/non-volatile computer system storage medium. Although not shown in FIG. 15, a magnetic disk drive configured to read data from and write data to a removable non-volatile magnetic disk (for example, a "floppy disk") may be provided, and an optical disc drive configured to read data from and write data to a removable non-volatile optical disc (for example, a compact disc read-only memory (Compact Disc Read-Only Memory, hereinafter briefly referred to as CD-ROM), a digital video disc read-only memory (Digital Video Disc Read-Only Memory, hereinafter briefly referred to as DVD-ROM), or another optical medium) may be provided. In these cases, each drive may be connected to the communication bus 1540 through one or more data medium interfaces. The memory 1520 may include at least one program product, the program product includes a set of (for example, at least one) program modules, and these program modules are configured to perform functions in embodiments of this specification.

A program/utility including a set of (at least one) program modules may be stored in the memory 1520. Such a program module includes but is not limited to an operating system, one or more applications, another program module, and program data. Each of or a specific combination of these examples may include implementation of a network environment. The program module usually performs a function and/or a method described in embodiments of this specification.

The electronic device 1500 may also communicate with one or more external devices (for example, a keyboard, a pointing device, or a display), and may further communicate with one or more devices that enable a user to interact with the device, and/or communicate with any device (for example, a network interface card or a modem) that enables the device to communicate with one or more other devices. Such communication may be performed through the communication interface 1530. In addition, the electronic device 1500 may further communicate with one or more networks (for example, a local area network (Local Area Network, hereinafter briefly referred to as LAN), a wide area network (Wide Area Network, hereinafter briefly referred to as WAN), and/or a public network, for example, the internet) through a network adapter (not shown in FIG. 15), and the network adapter may communicate with another module of the device through the communication bus 1540. It should be understood that, although not shown in FIG. 15, other hardware and/or software modules may be used in combination with the electronic device 1500, including but not limited to: microcode, a device driver, a redundancy processing unit, an external magnetic disk drive array, a redundant arrays of independent drives (Redundant Arrays of Independent Drives, hereinafter briefly referred to as RAID) system, a magnetic tape driver, a data backup storage system, and the like.

The processor 1510 runs the program stored in the memory 1520, to perform various function applications and data processing, for example, implement the method provided in embodiments of this specification.

It may be understood that an interface connection relationship between the modules shown in this embodiment of this specification is merely an example for description, and does not constitute a limitation on the structure of the electronic device 1500. In some other embodiments of this specification, the electronic device 1500 may alternatively use an interface connection manner different from that in the foregoing embodiments, or a combination of multiple interface connection manners.

In the foregoing embodiments, related processors may include, for example, a CPU, a DSP, a microcontroller, or a digital signal processor, and may further include a GPU, an embedded neural-network processing unit (Neural-network Processing Unit, hereinafter briefly referred to as NPU), and an image signal processor (Image Signal Processor, hereinafter briefly referred to as ISP). The processors may further include a necessary hardware accelerator or logic processing hardware circuit, for example, an ASIC, or one or more integrated circuits configured to control program execution of the technical solutions of this application. In addition, the processor may have a function of operating one or more software programs. The software program may be stored in a storage medium.

An embodiment of this application further provides a computer-readable storage medium. The computer-readable storage medium stores a computer program. When the computer program is run on a computer, the computer is enabled to perform the method provided in embodiments of this application.

An embodiment of this application further provides a computer program product. The computer program product includes a computer program. When the computer program is run on a computer, the computer is enabled to perform the method provided in embodiments of this application.

In embodiments of this application, "at least one" means one or more, and "multiple" means two or more. A term "and/or" describes an association relationship between associated objects and indicates that three relationships may exist. For example, A and/or B may indicate the following three cases: Only A exists, both A and B exist, and only B exists. A and B may be singular or plural. A character "/" usually indicates an "or" relationship between the associated objects. "At least one of the following items" and a similar expression thereof means any combination of these items, including a single item or any combination of multiple items. For example, at least one of a, b, or c may indicate a, b, c, a and b, a and c, b and c, or a, b, and c, where a, b, and c may be singular or plural.

A person of ordinary skill in the art may be aware that units and algorithm steps described in embodiments disclosed in this specification can be implemented by electronic hardware, or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

A person skilled in the art may clearly understand that, for convenient and brief description, for a detailed working process of the foregoing system, apparatus, and unit, refer to a corresponding process in the foregoing method embodiments. Details are not described herein again.

In embodiments of this application, when any of the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform a part or all of the steps of the methods described in embodiments of this application. The foregoing storage medium includes any medium that can store program code, for example, a USB flash drive, a removable hard disk, a read-only memory (Read-Only Memory, hereinafter briefly referred to as ROM), a random access memory (Random Access Memory, hereinafter briefly referred to as RAM), a magnetic disk, or an optical disc.

The foregoing descriptions are merely specific implementations of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A smart home scene deployment method, applied to a first node, wherein the method comprises:
obtaining a target scene and architecture information of a smart home network; and
deploying the target scene on a target node based on the architecture information of the smart home network, wherein
the target node comprises the first node and/or a second node, the first node is a host in the smart home network, and the second node comprises an extension host and/or a gateway in the smart home network.

2. The method according to claim 1, wherein the deploying the target scene on the target node based on the architecture information of the smart home network comprises:
obtaining historical load information of the first node and/or historical load information of the second node; and
deploying the target scene on the target node based on the historical load information of the first node and/or the historical load information of the second node and the architecture information of the smart home network.

3. The method according to claim 2, wherein the target scene comprises an effective moment, the historical load information of the first node comprises load information that is of the first node and that corresponds to the effective moment, and the historical load information of the second node comprises load information that is of the second node and that corresponds to the effective moment.

4. The method according to any one of claims 1 to 3, wherein the target scene comprises multiple pieces of information in event information, condition information, and action information, and the deploying the target scene on the target node based on the architecture information of the smart home network comprises:
obtaining multiple segments based on the target scene, wherein any one of the multiple segments comprises an event segment, a condition segment, or an action segment in the target scene; and
deploying the multiple segments on the target node based on the architecture information of the smart home network.

5. The method according to claim 4, wherein the target node comprises an event node and an action node, the event segment in the target scene is deployed on the event node, the action segment in the target scene is deployed on the action node, and the method further comprises:
monitoring, by the event node, an event; and
sending, by the event node, first information to the action node in response to the detected event, for the action node to execute, based on the first information, an action corresponding to the action segment in the target scene, wherein
the first information indicates that the detected event already meets a rule corresponding to the event segment in the target scene.

6. The method according to claim 4, wherein the target node comprises an event node, a condition node, and an action node, the event segment in the target scene is deployed on the event node, the condition segment in the target scene is deployed on the condition node, the action segment in the target scene is deployed on the action node, and the method further comprises:
monitoring, by the event node, an event; and
sending, by the event node, first information to the condition node in response to the detected event, for the condition node to determine, based on the first information, whether a condition meets a rule corresponding to the condition segment in the target scene, and after the condition meets the rule corresponding to the condition segment in the target scene, sending, by the condition node, second information to the action node, for the action node to execute, based on the second information, an action corresponding to the action segment in the target scene, wherein
the first information indicates that the detected event already meets a rule corresponding to the event segment in the target scene, and the second information indicates that the condition already meets the rule corresponding to the condition segment in the target scene.

7. The method according to claim 5 or 6, wherein the event comprises a status change event of a target smart home device, and the target smart home device is a smart home device controlled by the event node in the target scene.

8. The method according to any one of claims 1 to 7, wherein the method further comprises:
obtaining scene information deployed on the first node; and
deploying the target scene on the target node based on the scene information deployed on the first node and the architecture information of the smart home network.

9. A smart home scene deployment system, comprising a first node and a second node, wherein
the first node is configured to: obtain a target scene and architecture information of a smart home network; and deploy the target scene on a target node based on the architecture information of the smart home network, wherein the target node comprises the first node and/or the second node, the first node is a host in the smart home network, and the second node comprises an extension host and/or a gateway in the smart home network.

10. The system according to claim 9, wherein the first node is further configured to: obtain historical load information of the first node and/or historical load information of the second node; and deploy the target scene on the target node based on the historical load information of the first node and/or the historical load information of the second node and the architecture information of the smart home network.

11. The system according to claim 9 or 10, wherein the target scene comprises multiple pieces of information in event information, condition information, and action information, and the first node is further configured to: obtain multiple segments based on the target scene, wherein any one of the multiple segments comprises an event segment, a condition segment, or an action segment in the target scene; and deploy the multiple segments on the target node based on the historical load information of the first node and the architecture information of the smart home network.

12. The system according to claim 11, wherein the target node comprises an event node and an action node, the event segment in the target scene is deployed on the event node, and the action segment in the target scene is deployed on the action node, wherein
the event node is configured to: monitor an event; and send first information to the action node in response to the detected event; and
the action node is configured to execute, based on the first information, an action corresponding to the action segment in the target scene, wherein
the first information indicates that the detected event already meets a rule corresponding to the event segment in the target scene.

13. The system according to claim 11, wherein the target node comprises an event node, a condition node, and an action node, the event segment in the target scene is deployed on the event node, the condition segment in the target scene is deployed on the condition node, and the action segment in the target scene is deployed on the action node, wherein
the event node is configured to: monitor an event, and send first information to the condition node in response to the detected event;
the condition node is configured to: determine, based on the first information, whether a condition meets a rule corresponding to the condition segment in the target scene, and after the condition meets the rule corresponding to the condition segment in the target scene, send second information to the action node; and
the action node is configured to execute, based on the second information, an action corresponding to the action segment in the target scene, wherein
the first information indicates that the detected event already meets a rule corresponding to the event segment in the target scene, and the second information indicates that the condition already meets the rule corresponding to the condition segment in the target scene.

14. An electronic device, comprising a processor and a memory, wherein the memory is configured to store a computer program; the processor is configured to run the computer program, to implement the smart home scene deployment method according to any one of claims 1 to 8.

15. A computer-readable storage medium, wherein the computer-readable storage medium stores a computer program, and when the computer program is run on a computer, the smart home scene deployment method according to any one of claims 1 to 8 is implemented.
